# EUROPEAN PATENT APPLICATION

(11) **EP 1 732 071 A1**
(43) Date of publication of application: **13.12.2006**
(21) Application number: 06011546.6
(22) Date of filing: 02.06.2006
(51) Int. Cl.: G11B 7/085

(54) **Lens positioning method, cutting method, positioning method and cutting apparatus**

(30) Priority: 09.06.2005 JP 2005169890
(71) Applicant: SONY CORPORATION, Tokyo (JP)
(72) Inventor: Hashimoto, Gakuji, Shinagawa-ku Tokyo (JP)
(74) Representative: Müller - Hoffmann & Partner

(57) **Abstract**

A lens positioning method is provided. While vibrating an objective lens in the direction parallel with an optical axis, either the objective lens or a master disc in which a resist material has been formed as a film onto a substrate is moved, thereby changing a distance between the objective lens and a surface of the master disc. A return laser beam transmitted through the objective lens and reflected by the master disc surface is detected by a photodetector. When the master disc is located near a focal point of the objective lens, the return laser beam is detected by the photodetector. When the return laser beam is detected, the movement of either the objective lens or the master disc is stopped.

## Description

### CROSS REFERENCES TO RELATED APPLICATIONS

The present invention contains subject matter related to Japanese Patent Application JP 2005-169890 filed in the Japanese Patent Office on JUNE 9, 2005, the entire contents of which being incorporated herein by reference.

### BACKGROUND OF THE INVENTION

### Field of the Invention

The invention relates to a lens positioning method, acuttingmethod, apositioningmethod, andacutting apparatus which are applied to positioning of an objective lens in a cutting step upon manufacturing of, for example, a high-density optical disc.

### Description of the Related Arts

As a high-density optical disc, for example, there has been proposed an optical disc having a recording capacity of about 25 Gbytes for a single layer of one side or having a recording capacity of about 50 Gbytes for double layers of one side. In such an optical disc, in order to decrease a spot diameter of a beam for recording and reproduction, a wavelength of a light source is set to 405 nm and a numerical aperture NA of an objective lens is set to a large value of 0.85. In the high-density optical disc, a beam spot area can be reduced to about 1/5 of that of a DVD. Further, since an angular error (called a tilt margin) which is permitted for an inclination from 90° of an angle formed between the disc surface and an optical axis of a laser beam decreases as a result of an increase in the numerical aperture NA of the objective lens, a cover layer covering an information layer is thinned to 0.1 mm. In the case of a read only disc, the information layer is a reflecting layer or a translucent reflecting layer on which pits have been formed. In the case of a recordable disc, the information layer is a layer on which grooves have been formed and a phase change or the like can be recorded.

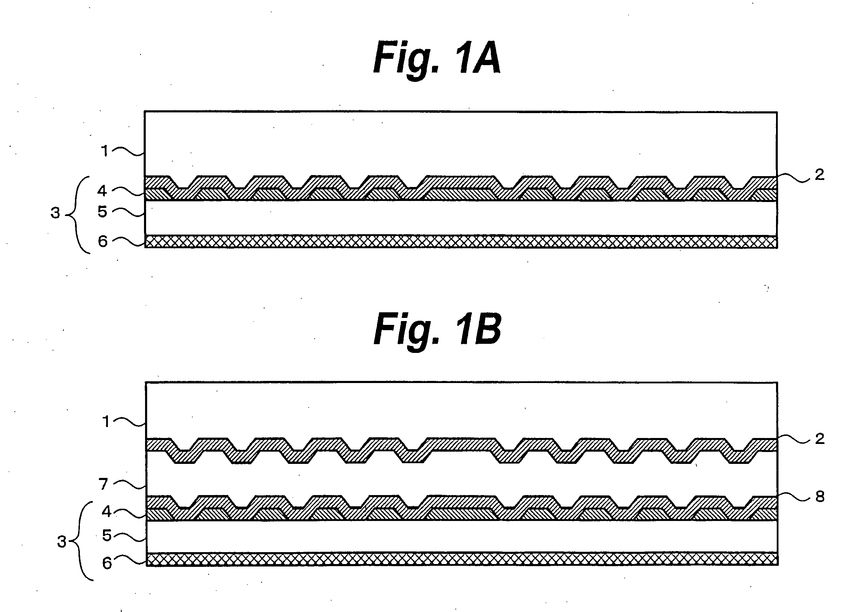

Figs. 1A and 1B show structures of examples of a high-density optical disc to which an embodiment of the invention can be applied. Fig. 1A shows the structure of a single layer. Reference numeral 1 denotes a substrate made of polycarbonate (hereinafter, properly abbreviated to PC) having a thickness of 1.1 mm.

Pits of a master disc have been transferred onto the surface of the substrate 1 by injection molding. The substrate 1 is coated with a reflecting film 2. A cover layer 3 as a light transmitting layer having a thickness of 0.1 mm has been adhered onto the reflecting film 2. The cover layer 3 is formed by a method whereby a PC sheet 5 which has previously been punched is adhered with a UV (ultraviolet rays) hardening type adhesive agent 4 and a surface portion of the PC sheet 5 is coated with a hard coating 6.

Fig. 1B shows the structure of double layers. In a manner similar to the single-layer structure, Fig. 1B shows the disc having two information layers each having such a structure that the reflecting film 2 as a total reflecting film is formed on a substrate of 1.1 mm, a translucent reflecting film 8 is formed on a light transmitting layer 7 called an intermediate layer formed on the reflecting film 2, and further the cover layer 3 is adhered onto the translucent reflecting film 8. The reflecting film 2 is formed in a depth of 100 µm when seen from the incident direction (on the side of the hard coating 6) of the laser beam and the translucent reflecting film 8 is formed in a depth of 75 µm.

In the case of the one-side double-layer disc shown in Fig. 1B, the reflecting film 2 existing in the depth of 100 µm when seen from the incident direction of the laser beam is defined as a reference layer (the 0th recording layer; called an L0 layer) and the recording layer added in the depth of 75 µm is defined as a first recording layer (called an L1 layer).

In the case of manufacturing the foregoing high-density optical disc, a surface of the substrate is coated with a resist, a pattern of the pits or grooves is exposed by the laser beam, a disc-shaped master disc having concave and convex portions corresponding to the pits or grooves on the resist is formed by development, a stamper made of a metal is formed from the disc-shaped master disc, the disc substrate is formed by using the stamper by the injection molding, and the recording layer is formed as a film onto the disc substrate.

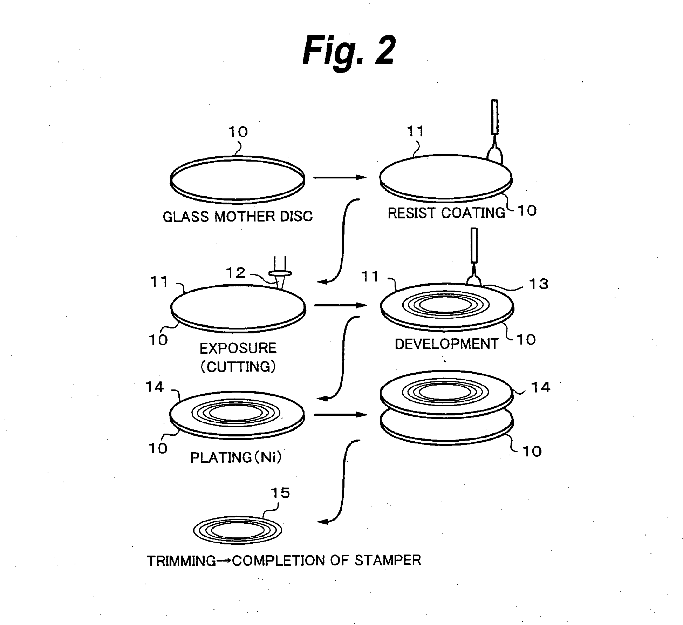

Fig. 2 shows manufacturing steps of the stamper. First, a surface of a substrate 10 is coated with a very thin resist (photosensitive agent) 11 by a spin coating method or the like, thereby forming a master disc. While the master disc is rotated, it is exposed by a laser beam 12 of a cutting apparatus. A latent image of the pattern corresponding to the pits or grooves is formed on the resist 11 by exposure.

After that, by dropping a developer 13 onto the surface of the resist 11 on the rotating glass substrate 10 and executing a developing process, the concave/convex resist pattern corresponding to the grooves or pits of the optical disc is formed on the substrate 10. A liquid of acid, alkali, or the like is used as a developer. An aqueous solution of tetramethyl ammonium, KOH, NaOH, Na₂CO₃, or the like can be mentioned as an alkali solution which is used for the development. Hydrochloric acid, nitric acid, sulfuric acid, phosphoric acid, or the like can be mentioned as an acid solution.

Subsequently, a metal 14 such as nickel or the like is deposited onto the substrate 10 by a plating process, peeled off, and trimmed, so that a stamper 15 is obtained. By attaching the stamper 15 to a die of an injection molding apparatus and injecting a resin such as PC or the like into a cavity, the disc substrate onto which the concave/convex portions of the stamper have been transferred is formed. At this time, the resin which is used for the disc substrate has been plasticized by heat so that it can be filled into the die at a high speed. After the injection-molded disc substrate was cooled to 30°C or lower, by forming a thin metal film onto the pit surface side by using a sputtering apparatus, the reflecting film is formed.

Subsequently, a UV (ultraviolet rays) hardening type resin is dropped as an adhesive agent onto the disc substrate on which the reflecting layer has been formed as a film and the disc substrate is uniformly coated with the resin by the spin coating method. After that, the coating film of the UV hardening type resin on the disc substrate and the PC film are held at the opposite positions and subsequently adhered. The adhering process of the PC film is executed in a vacuum. This is because it is necessary to prevent such a situation that wrinkles or gaps are formed on the adhering surfaces of the disc substrate and the PC film and a reading error occurs.

Subsequently, ultraviolet rays are irradiated to the disc on which the PC film has been adhered and the UV hardening resin is hardened, thereby adhering the disc substrate and the PC film. Further, a UV hardening type hard coating material is dropped onto the PC film adhered to the disc, the PC film is uniformly coated with the hard coating material, and the hard coating material is hardened by irradiating the ultraviolet rays again, thereby manufacturing a hard coating layer. Thus, the disc is completed.

A technique which can solve the problem occurring in the case of using the organic resist in the related art and manufacture the high-density optical disc has been disclosed in Patent Document 1 (JP-A-2003-315988). There has been shown a technique that, according to an inorganic resist material made of incomplete oxide of a transition metal disclosed in Patent Document 1, a pattern smaller than the spot diameter can be exposed even by a visible laser of about 405 nm owing to heat recording characteristics. An attention is paid to such a technique as a technique which is useful for a mastering technique of the optical disc corresponding to the realization of the high recording density.

The incomplete oxide of the transition metal used here denotes a compound whose oxygen content is deviated in such a direction that it is smaller than a stoichiometric composition according to a valence number which the transition metal can have, that is, a compound in which an oxygen content in the incomplete oxide of the transition metal is smaller than that of the stoichiometric composition according to the valence number which the transition metal can have. In the incomplete oxide of the transition metal, since a latent image forming portion by the exposure has been oxidation-altered, it is soluble into an alkali developer and microfabrication of the master disc for the optical disc can be realized.

An embodiment of the invention relates to a positioning method of an objective lens in a cutting apparatus in the case of using such an inorganic resist. In the cutting apparatus, since a spiral track is formed by feeding precision of a master disc in which the inorganic resist has been formed as a film onto a substrate such as a silicon wafer or the like, tracking control is not made but only control in the focusing direction (focusing servo) is made. The focusing control is made by a method similar to the method such as an astigmatism method or the like which is used in a reproducing apparatus.

Since a lead-in range of the focusing control is limited, first, a distance between the objective lens and the surface of the master disc is brought in a range where the focusing servo can be pulled in. Control for such a purpose is called positioning control and is made by allowing the position of the master disc to approach the objective lens. The focusing servo is made operative after completion of the positioning. In the focusing servo, the vertical position of the objective lens is feedback-controlled so that an in-focus state can be obtained.

In the cutting apparatus disclosed in Patent Document 1, since the commercially available objective lens of the small diameter is used, generally, there is a tendency that a working distance of the objective lens decreases. The working distance is a physical vertex portion of the objective lens that is nearest to the focal position. For example, when the working distance is equal to 150 µm, if the positioning of the objective lens is not performed at high precision in the initial adjustment after the master disc was set, there is a fear that the obj ective lens collides with the master disc or an inconvenience occurs in the focusing servo. It is, therefore, important to set the objective lens at the time of the initial adjustment so that the focal position of the objective lens coincides with the recording surface of the master disc.

The positioning method in the related art will now be described. A focal depth of the objective lens can be calculated by a value λ/(2NA)² obtained by dividing a wavelength λ of light by the square of the numerical aperture NA of the lens. In the cutting apparatus in the related art, in order to converge the spot of the laser beam for exposure, the wavelength is shortened and the numerical aperture is increased. Therefore, the focal depth becomes very small.

According to the method disclosed in Patent Document 1, the lens of the large numerical aperture and the light source of the short wavelength are not necessary in the related art. For example, when λ = 405 nm and NA = 0.85, the focal depth of 0.14 µm can be obtained. The focal depth denotes a range where the focal point is satisfactory even if the objective lens moves on an optical axis. Generally, photodetecting sensitivity in a photodetector of an optical pickup is set so that up to a value which is several times as large as the focal depth can be detected. The range where the focal depth can be detected is called a detectable range. For example, the detectable range is assumed to be 2.5 µm.

In the case where either the objective lens or the master disc is moved and the positioning control of the objective lens is made, only when a distance between them lies within the detectable range, a detection output can be derived from the photodetector. When the distance is out of the detectable range, since a photodetecting light amount decreases, the detection output is difficult to be obtained and it is difficult to detect the existence of the master disc.

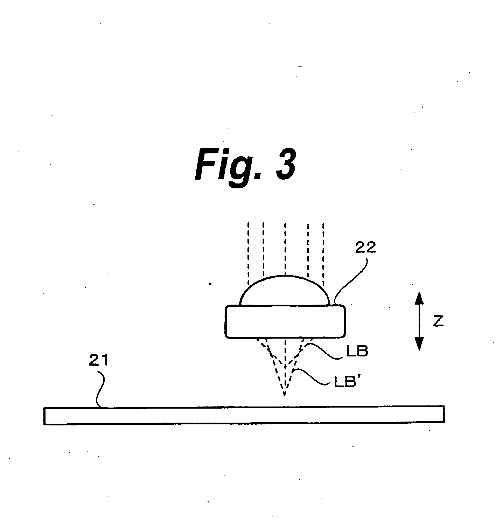

As a positioning method in the cutting apparatus in the related art, a method of using the laser beam for detecting having a long wavelength in addition to the laser beam (wavelength is equal to, for example, 266 nm) which is used for the cutting has been proposed. As shown in Fig. 3, a laser beam LB for cutting and a laser beam LB' for detecting are irradiated to a master disc 21 through an objective lens 22 and the return light obtained by reflecting the laser beam LB' by the master disc 21 is detected by the photodetector of the pickup. The position of the objective lens 22 can be shifted in the direction of a Z axis.

In the case of the laser beam LB' for detecting, since its wavelength is longer than that of the laser beam LB for cutting, the focal depth is deep and the detectable range is widened more than that of the laser beam LB. As compared with the case where the master disc 21 is detected by using the laser beam LB, by using the laser beam LB', the master disc 21 can be detected more easily. A technique in which a diameter of a lens used for the objective lens 22 for transmitting the laser beam LB' is reduced, thereby decreasing an apparent NA and increasing the focal depth has also been proposed.

As another method of the positioning method in the cutting apparatus in the related art, there is a method whereby a distance sensor 23 which is moved integrated with the objective lens 22 is provided and the positioning is executed on the basis of an output signal of, for example, the optical distance sensor 23.

### SUMMARY OF THE INVENTION

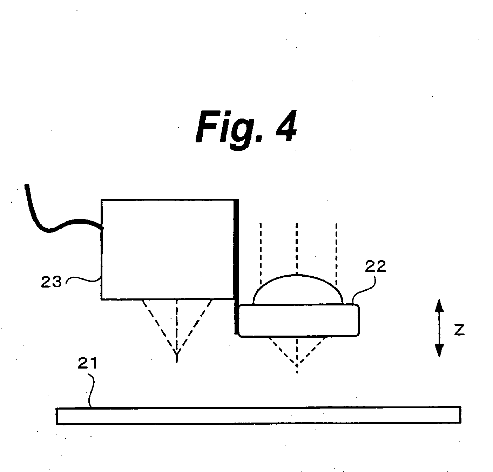

The method shown in Fig. 3 has such a problem that since it is necessary that a laser generating source of a different wavelength and an optical path are added to the optical pickup, the optical pickup becomes complicated and the costs rise. According to the method shown in Fig. 4 whereby the distance sensor 23 is provided, it is necessary to make the focal position of the objective lens 22 coincide with the setting position of the distance sensor 23. If a relative distance (positional deviation) between the objective lens 22 and the distance sensor 23 changes by an amount of the working distance or more, there is a fear that the objective lens 22 collides with the master disc 21 at the time of the positioning operation and there is a risk that a defect occurs in the focusing servo. Further, there is such a problem that the costs rise due to the addition of the distance sensor 23.

It is, therefore, desirable to detect the existence of the master disc 21 by using the laser beam LB for exposure without using the laser beam LB' for detection or additionally providing the distance sensor 23. However, there is such a problem that since the focal depth is shallow as mentioned above, the detectable range is narrow, so that it is difficult to detect the master disc 21.

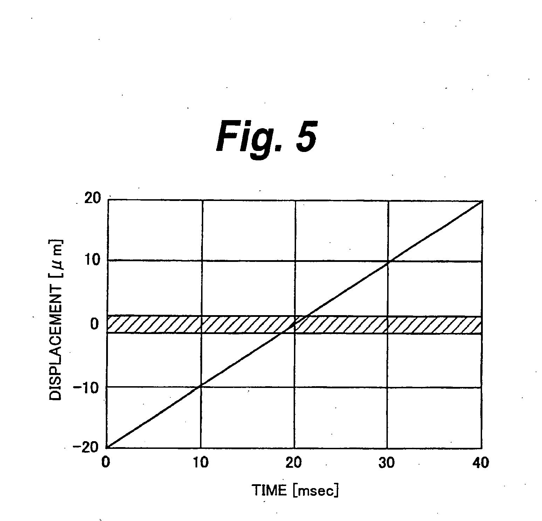

Fig. 5 is a graph showing a displacement (axis of ordinate) to a time (axis of abscissa) in the case where either the objective lens or the master disc, for example, the master disc is made to approach the objective lens from a remote position in the Z-axial direction at a speed of 1 mm/sec. Although the objective lens side is moved as will be explained hereinafter in the actual apparatus, the operation will be explained here with respect to a system in which the master disc side is moved as an example in order to make an explanation easy. The displacement is assumed to be 0 at the in-focus position. The displacement which occurs at a ratio of 1 µm per 1 msec is shown by a linear straight line. As mentioned above, as shown by a hatched band in Fig. 5, the detectable range is a predetermined range, for example, 2.5 µm where the position of the displacement of 0 is set to a center. Therefore, a detection signal can be obtained from the photodetector only in a period of time during which the linear straight line crosses the band. Since a width of band is so small to be 2. 5 µm as mentioned above, the period of time during which the linear straight line and the band cross is short, a construction of a signal processing circuit for detection becomes complicated, or there is a risk of occurrence of an erroneous detection.

It is, therefore, desirable to provide a lens positioning method, a cutting method, a positioning method, and a cutting apparatus in which positioning can be preferably performed by using a laser beam for exposure without additionally using a distance sensor.

According to an embodiment of the present invention, there is provided a lens positioning method comprising:
a moving step of moving either an objective lens or a master disc in which a resist material has been formed as a film onto a substrate while vibrating the objective lens in the direction parallel with an optical axis, thereby changing a distance between the objective lens and a surface of the master disc;
a detecting step of detecting a return laser beam which has been transmitted through the objective lens and reflected by the surface of the master disc by a photodetector; and
a step of allowing the return laser beam to be detected by the photodetector when the master disc is located near a focal point of the objective lens and allowing the movement of either the objective lens or the master disc to be stopped when the return laser beam is detected.

According to another embodiment of the present invention, there is provided a cutting method of cutting a master disc by a laser beam, comprising:
a moving step of moving either an objective lens or the master disc in which a resist material has been formed as a film onto a substrate while vibrating the objective lens in the direction parallel with an optical axis, thereby changing a distance between the objective lens and a surface of the master disc;
a detecting step of detecting a return laser beam which has been transmitted through the objective lens and reflected by the surface of the master disc by a photodetector;
a step of allowing the return laser beam to be detected by the photodetector when the master disc is located near a focal point of the objective lens and allowing the movement of either the objective lens or the master disc to be stopped when the return laser beam is detected; and
a step of forming a latent image onto the master disc in correspondence to each shape of grooves or pits by the laser beam transmitted through the objective lens while controlling a focus of the objective lens.

According to still another embodiment of the present invention, there is provided a lens positioning apparatus comprising:
an actuator vibrating an objective lens in the direction parallel with an optical axis;
a driver moving either the objective lens or a master disc in which a resist material has been formed as a film onto a substrate, thereby changing a distance between the objective lens and a surface of the master disc; and
a photodetector detecting a return laser beam which has been transmitted through the objective lens and reflected by the surface of the master disc,
wherein when the master disc is located near a focal point of the objective lens, the return laser beam is detected by the photodetector and when the return laser beam is detected, the movement of either the objective lens or the master disc is stopped.

According to further another embodiment of the present invention, there is provided a cutting apparatus for cutting a master disc by a laser beam, comprising:
a driver moving either an objective lens or the master disc in which a resist material has been formed as a film onto a substrate, thereby changing a distance between the objective lens and a surface of the master disc;
a photodetector detecting a return laser beam which has been transmitted through the objective lens and reflected by the surface of the master disc; and
a focusing controller controlling a focus of the objective lens into an in-focus state when the master disc is locatednear a focal point of the obj ective lens and forming a latent image onto the master disc in correspondence to each shape of grooves or pits by the laser beam transmitted through the objective lens.

According to an embodiment of the present invention, the master disc can be positioned to a focal distance of the objective lens without using a laser beam of a different wavelength and the distance sensor. Therefore, it is possible to prevent a construction of an optical pickup from being complicated. The relative positioning between the distance sensor and the objective lens canbe made unnecessary and initial setting can be easily made. Further, the increase in costs by the providing of the distance sensor can be prevented.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Figs. 1A and 1B are schematic diagrams showing examples of an optical disc to which an embodiment of the invention can be applied;
Fig. 2 is a schematic diagram showing manufacturing steps of a stamper;
Fig. 3 is a schematic diagram for explaining an example of a positioning method in the related art;
Fig. 4 is a schematic diagram for explaining another example of the positioning method in the related art;
Fig. 5 is a graph for explaining the operation for obtaining a detection signal when a master disc is moved;
Fig. 6 is aperspective view schematically showing an external view of a cutting apparatus according to the embodiment of the invention;
Fig. 7 is a schematic diagram showing an example of a moving mechanism of an optical pickup block in the embodiment of the invention;
Fig. 8 is a schematic diagram showing an example of the optical pickup block; and
Fig. 9 is a graph for explaining the operation for obtaining a detection signal when a master disc is moved in the embodiment of the invention.

### DETAILED DESCRIPTION OF THE PREFERRED EMBODIMENT

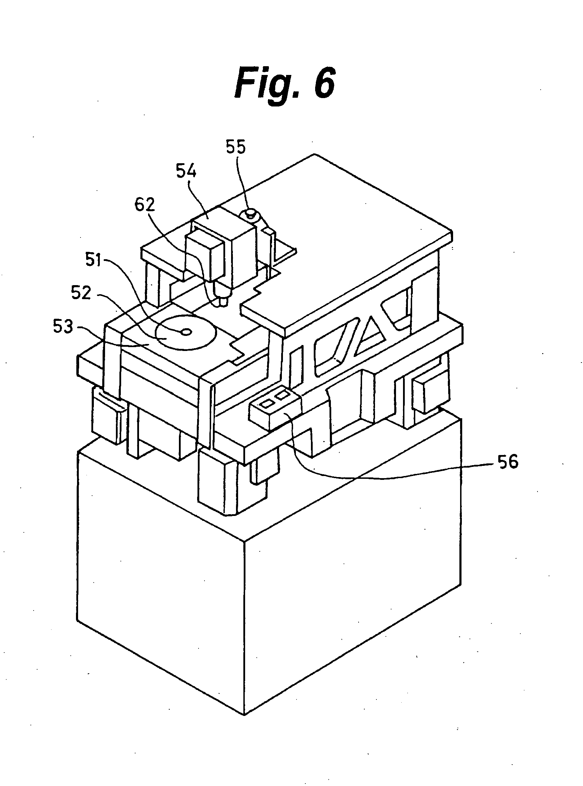

An embodiment of the invention will be described hereinbelow with reference to the drawings. Fig. 6 schematically shows an external view of a cutting apparatus according to the embodiment of the invention. The cutting apparatus is arranged on a box-shaped cabinet. A master disc in which an inorganic resist has been formed as a film onto a substrate, for example, a silicon wafer is put on a disc-shaped cutting table 52 which is rotated by a spindle 51. The inorganic resist is an incomplete oxide of a transition metal. Molybdenum (Mo) , tungsten (W), or the like is used as a transition metal. For example, the incomplete oxide of (0 < x < 0.75) at a composition ratio Mo₁₋ₓ0ₓ is used. The cutting table 52 is rotated by a motor using the spindle 51 as a rotary axis.

The spindle 51, cutting table 52, and spindle motor are arranged on a supporting base 53. The supporting base 53 can be horizontally moved in the radial direction of the master disc. A spiral track is formed by the feeding precision of the master disc by the cutting table 52. Reference numeral 56 denotes a switching unit for operating the cutting apparatus.

An optical pickup block 54 is arranged over the cutting table 52. An objective lens 62 is arranged under the optical pickup block 54. A laser beam for exposing converged by the objective lens 62 is irradiated onto the master disc. The optical pickup block 54 can be deviated in the Z-axial direction as a direction perpendicular to the surface of the master disc by a Z-axial motor 55. A stepping motor, a linear motor, or the like can be used as a Z-axial motor 55.

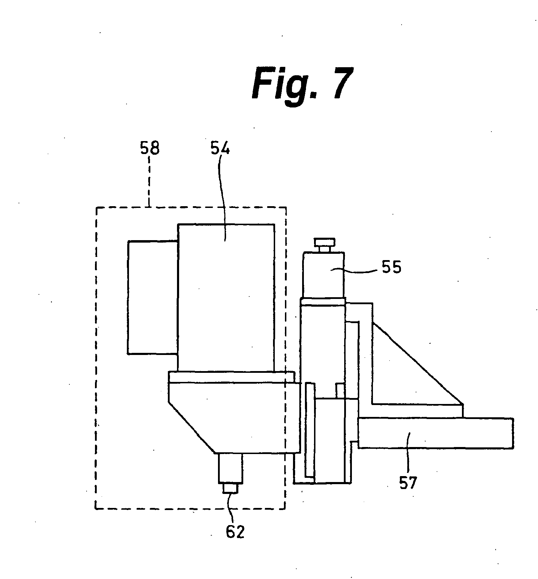

Fig. 7 shows only the portion of the optical pickup block 54. The Z-axial motor 55 is fixed to a supporting unit 57. A portion which includes the optical pickup block 54 and is shown by a region surrounded by a broken line is elevated up and down by the Z-axial motor 55. In this manner, in the embodiment, the cutting table 52 can be moved in the horizontal direction and the optical pickup block 54 can be elevated up and down.

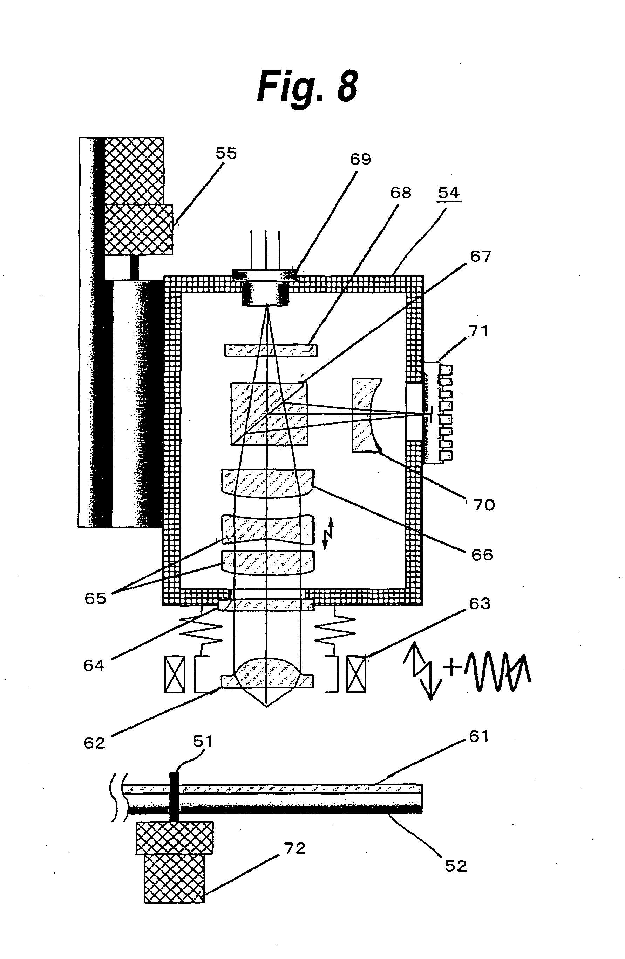

Fig. 8 shows an example of the optical pickup block 54 to which the invention can be applied. The laser beam having a wavelength of, for example, 405 nm converged by the objective lens 62 (its numerical aperture NA is equal to, for example, 0.85) having a construction of , for example, two groups is irradiated onto an inorganic resist on the surface of a master disc 61 put on the cutting table 52. The objective lens 62 is assembled in a uniaxial actuator 63 which can be deviated in the focusing direction (direction parallel with the optical axis).

The laser beam emitted from a laser diode 69 is inputted into a collimator lens 66 through a grating 68 and a polarization beam splitter (PBS) 67. ±primary diffracted light is generated through the grating 68. The laser beam converted into parallel light by the collimator lens 66 is inputted to a spherical aberration correcting device 65 such as a beam expander or the like.

Further, the laser beam is inputted to the master disc 61 through a quarter-wave plate 64 and the objective lens 62 and the master disc 61 is exposed. The laser beam of the linear polarization becomes the circularly polarized light by the quarter-wave plate 64.

The light reflected by the master disc 61 is transmitted through the objective lens 62 and returned from the circularly polarized light to the linearly polarized light by the quarter-wave plate 64. At this time, since the polarizing direction is inclined by 90° from the light (going light) of the light emitted from the laser diode 69, the light reflection occurs at the adhering surface of the polarization beam splitter 67.

After the return light which is being converged by the collimator lens 66 is transmitted through a multi-lens 70 before it is reflected by the PBS 67, it is converged onto a photodetector 71 formed as an IC and converted into an electric signal. The multi-lens 70 causes aberration to be used for an astigmatism method of detecting a focusing error by using a difference of the position where a light spot is formed.

The photodetector 71 is, for example, a 4-split detector. In the in-focus state, a shape of the light spot which is formed onto a photosensitive surface of the photodetector 71 by the return light is almost a true circle. When the objective lens 62 is too close to the master disc 61 and when it is too far from the master disc 61, each spot shape becomes an ellipse in which a major-axial direction and a minor-axial direction are mutually replaced. By obtaining a difference between the spot shapes from an output signal of the photodetector 71, the focusing error can be detected. The uniaxial actuator 63 is driven on the basis of the focusing error and the focusing error is corrected.

Further, although an intensity of the laser beam is set to a predetermined value upon positioning, at the time of the exposure to record data, in order to form a latent image corresponding to a pattern of the pits, grooves, or the like onto the master disc, the data is modulated by a direct modulating method of directly driving the laser diode 69 or an external modulating method using an AOM (Acousto Optical Modulator) or the like.

The foregoing optical pickup block 54 can be deviated in the Z-axial direction by the Z-axial motor 55. Upon detection of the focusing position, the optical pickup block 54 is moved so as to approach the master disc 61 in the optical axial direction by rotating the Z-axial motor 55. During the movement of the optical pickup block 54, the focal position is detected by using the output signal of the photodetector 71. In this case, as will be explained hereinlater, by vibrating the objective lens 62 by a micro amplitude, a detecting probability of the focusing position is raised.

When the focal position of the objective lens 62 almost coincides with the master disc 61, the reflection light from the master disc 61 is inputted to the photodetector 71 and the electric output signal is derived from the photodetector 71. The driving to the Z-axial motor 55 is stopped by the output signal of the photodetector 71.

By the foregoing positioning method, positioning conditions which are necessary when using the focusing servo that is ordinarily used for the optical disc are satisfied, and the optical recording can be executed by making the focusing servo operative.

According to the embodiment of the invention, the objective lens 62 is vibrated in the Z direction at a high speed by the micro amplitude. The amplitude of the vibration in this instance is set to a very small value enough to sufficiently guarantee that the master disc 61 does not collide with the objective lens 62 and to cause an effect of raising a possibility of detection of the existence of the master disc 61.

Theoretically, it is sufficient to move at least either the master disc 61 or the objective lens 62 in order to change a distance between the master disc 61 and the objective lens 62. In the embodiment, the whole optical pickup block 54 is moved by the Z-axial motor 55 in the state where the position of the master disc 61 is come to rest as mentioned above. Further, the objective lens 62 is vibrated by the micro amplitude by driving the uniaxial actuator 63. It is also possible to construct in such a manner that the objective lens 62 is made to gradually approach the master disc 61 merely by driving the uniaxial actuator 63 and the objective lens 62 is vibrated without providing the Z-axial motor 55. Further, it is also possible to construct in such a manner that the objective lens 62 is merely vibrated and is deviated so that the position of the master disc 61 approaches the objective lens 62.

The operation will be described hereinbelow with respect to a system for moving the master disc side as an example in order to make an explanation easy. Upon positioning, the master disc 61 in which the inorganic resist has been formed as a film onto the substrate is elevated up and approaches the objective lens 62.

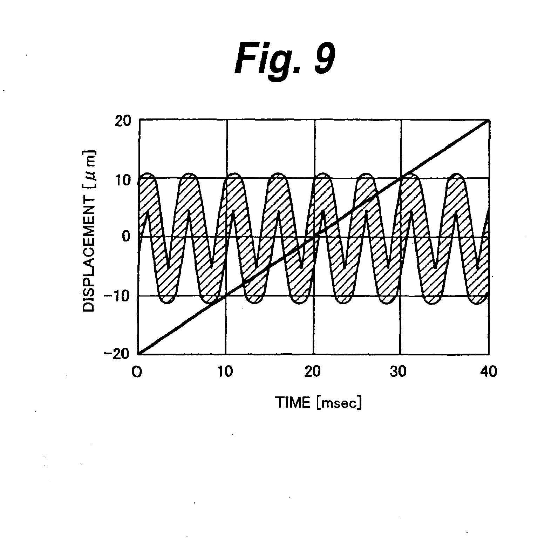

For example, when the objective lens 62 is vibrated in accordance with a sine wave in which an amplitude is equal to 10 µm and a frequency is equal to 200 Hz, such a sine wave can be expressed as a waveform shown in Fig. 9. Assuming that the master disc 61 is moved at a speed of 1 mm/sec, the movement of that the master disc 61 can be expressed as a linear straight line in the graph of Fig. 9. The displacement of the objective lens 62 can be expressed so as to change like a sine wave with the detectable range, for example, a width of 2.5 µm existing in the upper (+) and lower (-) positions around the in-focus position (displacement: 0) as a center.

As shown in Fig. 9, the linear straight line and the sine-wave-shaped displacement cross at a plurality of positions. By monitoring a sum signal of the photodetector 71, the sum signal is generated for the period of time during which they cross. As described with reference to Fig. 5, when the objective lens is not vibrated, since the crossing point of the linear straight line and the band is only one point, if the output signal of the photodetector which is generated at this crossing point is overlooked, the positioning becomes difficult.

On the other hand, according to the embodiment of the invention, the objective lens 62 is vibrated. The distance between the surface of the resist of the master disc 61 and the objective lens 62 is decreased or increased in association with the vibration of the objective lens 62. Therefore, even if such a distance in the case where the objective lens 62 is not vibrated is out of the detectable range, for example, 2.5 µm, it enters the detectable range as a result of the vibration. For example, even when the surface of the master disc 61 and the objective lens 62 are located at an upper position over the in-focus position by 10 µm, the sum signal is outputted from the photodetector at a position near the peak on the negative side of the objective lens 62. On the contrary, even when the obj ective lens 62 passes through the in-focus position and the objective lens 62 is located at a lower position under the in-focus position by 10 µm, the sum signal is outputted from the photodetector at a position near the peak on the positive side of the objective lens 62.

As mentioned above, according to the embodiment, when the master disc 61 is made to gradually approach the objective lens 62, the state where the detection signal can be generated from the photodetector occurs a plurality of number of times and a possibility of detection of the positioning can be raisedmore than that in the method whereby the objective lens 62 is not vibrated. The operation in the embodiment of the invention is equivalent to the operation for allowing the objective lens 62 to be come to rest and allowing the master disc 61 to approach the objective lens 62 while vibrating the master disc 61 by a micro amplitude. However, it is actually difficult to make control so as to vibrate the master disc 61. As mentioned above, the Z-axial motor 55 is used, the actuator 63 in the focusing direction inherently provided for the optical pickup block 54 can be used, and the objective lens 62 can be easily vibrated in the Z direction.

When the sum signal of the photodetector is detected, the driving of the driving source for moving the master disc 61 in the Z direction is stopped and a positioning sequence is finished. After that, the focusing servo is turned on. The sum signal which is outputted from the photodetector is subjected to an amplifying process and an integrating process or a sampling-holding process is executed as necessary. Further, the level of the detection signal is compared with a threshold value. There is provided amechanical or electrical stopping mechanism for preventing the objective lens 62 from colliding with the master disc 61 when the operator fails in positioning.

Although the embodiment of the invention has specifically been described above, the invention is not limited to the foregoing embodiment but various modifications based on a technical idea of the invention are possible. For example, the invention is not limited to the sine wave but the objective lens may be also vibrated by driving the actuator by a saw-tooth wave, a pulse wave, or the like. The invention is not limited to the control for making the objective lens approach the surface of the master disc but may also control in such a manner that after they are made to approach at the minimum distance, they are away from each other.

It should be understood by those skilled in the art that various modifications, combinations, sub-combinations and alterations may occur depending on design requirements and other factors insofar as they are within the scope of the appended claims or the equivalents thereof.

## Claims

1. A lens positioning method comprising:
a moving step of moving either an objective lens or a master disc in which a resist material has been formed as a film onto a substrate while vibrating said objective lens in a direction parallel with an optical axis, thereby changing a distance between said obj ective lens and a surface of said master disc;
a detecting step of detecting a return laser beam which has been transmitted through said objective lens and reflected by the surface of said master disc by a photodetector; and
a step of allowing said return laser beam to be detected by said photodetector when said master disc is located near a focal point of said obj ective lens and allowing the movement of either said objective lens or said master disc to be stopped when said return laser beam is detected.

2. A cutting method of cutting a master disc by a laser beam, comprising:
a moving step of moving either an objective lens or the master disc in which a resist material has been formed as a film onto a substrate while vibrating said objective lens in a direction parallel with an optical axis, thereby changing a distance between said obj ective lens and a surface of said master disc;
a detecting step of detecting a return laser beam which has been transmitted through said objective lens and reflected by the surface of said master disc by a photodetector;
a step of allowing said return laser beam to be detected by said photodetector when said master disc is located near a focal point of said objective lens and allowing the movement of either said objective lens or said master disc to be stopped when said return laser beam is detected; and
a step of forming a latent image onto said master disc in correspondence to each shape of grooves or pits by the laser beam transmitted through said obj ective lens while controlling a focus of said objective lens.

3. A method according to claim 2, wherein said resist material is an inorganic resist.

4. A method according to claim 2, wherein said objective lens is vibrated by an actuator for a focusing servo.

5. Amethodaccordingtoclaim2, wherein a wavelength of said laser beam is equal to about 405 nm and a numerical aperture of said objective lens is equal to or larger than about 0.85.

6. A lens positioning apparatus comprising:
an actuator vibrating an objective lens in a direction parallel with an optical axis;
a driver moving either said objective lens or a master disc in which a resist material has been formed as a film onto a substrate, thereby changing a distance between said objective lens and a surface of said master disc; and
a photodetector detecting a return laser beam which has been transmitted through said objective lens and reflected by the surface of said master disc,
wherein when said master disc is located near a focal point of said objective lens, said return laser beam is detected by said photodetector and when said return laser beam is detected, the movement of either said objective lens or said master disc is stopped.

7. A cutting apparatus for cutting a master disc by a laser beam, comprising:
a driver moving either an objective lens or the master disc in which a resist material has been formed as a film onto a substrate, thereby changing a distance between said objective lens and a surface of said master disc;
a photodetector detecting a return laser beam which has been transmitted through said objective lens and reflected by the surface of said master disc; and
a focusing controller controlling a focus of said objective lens into an in-focus state when said master disc is located near a focal point of said objective lens and forming a latent image onto said master disc in correspondence to each shape of grooves or pits by the laser beam transmitted through said objective lens.
